# EUROPEAN PATENT SPECIFICATION

(11) **EP 1 958 722 B1**
(45) Date of publication and mention of the grant of the patent: **02.06.2010**
(21) Application number: 07150472.4
(22) Date of filing: 28.12.2007
(51) Int. Cl.: B23D 45/04, B27B 5/20

(54) **Power miter saw**
Elektrische Gehrungssäge
Scie à onglet électrique

(30) Priority: 13.02.2007 US 706886
(43) Date of publication of application: 20.08.2008
(73) Proprietor: Robert Bosch GmbH, 70442 Stuttgart (DE)
(72) Inventor: Oberheim, Stephen C., Des Plaines, IL 60016 (US)
(74) Representative: Barth, Stephan Manuel

(56) References cited:
- EP-A- 1 787 773
- AU-A- 4 887 185
- US-A- 2 389 296
- US-A- 2 652 862

## Description

The present invention generally relates to power miter and abrasive cut off saws. A saw according to the preamble of claim 1 is known from AU-A-48871/85.

Miter saws have been the subject of continued research and development efforts in the power tool arena for decades, and many improvements have been made that has resulted in increased ease of use and productivity. Artisans who install trim carpentry have used power miter saws for some time and it is well known that wide stock such as crown molding and the like often requires a miter saw with either a bigger saw blade or a configuration that enables the blade to be moved along a horizontal path away and toward the fence of the miter saw. Such blade moving configurations are generally marketed as sliding compound miter saws, principally because most if not all commercially available saws of this type have a sliding guide assembly comprised of elongated rods that slide in respective bushings to move the saw blade and motor assembly relative to the fence of the saw.

Such sliding guide assemblies are an expensive component of such miter saws. The current state of the art for such sliding miter saws includes a linear guide that typically consists of two of such bushings and rod combinations. These relatively expensive linear bearings consist of recirculating ball bearings that operate together with turned, ground, polished and hardened steel rods that are approximately 40 cm long and 30 mm in diameter. To have minimum play and deflection of the saw blade and motor assembly, precise fits are required between the rods and the linear recirculating ball bearings over the entire linear travel of the rods. The rod must be made of a high hardness steel to prevent indentation by the hard steel balls. Such construction is relatively expensive.

Additionally, an undesirable feature of such bushing and rod linear guides is that space must be provided behind the saw for the rods to extend when the saw blade is positioned near the fence. Because of this space requirement, such a sliding saw cannot be put next to a wall which results in a larger footprint being occupied by such a saw. Additionally, these bushings and rod linear guide mechanisms are susceptible to damage from dirt and grit, particularly if the saw is a sliding abrasive cut off saw where an abrasive wheel is used to cut steel and other materials. The abrasive wheel grinds its way through the steel and produces a considerable volume of abrasive particles that generally come out of the back of the saw. These abrasive particles can penetrate into the ball bushings and damage the bearing. While it is possible to cover the rods with a bellows or similar cover, the hostile environment generally leads to degradation of the fabric and penetration of the ball bushing by the abrasive particles.

Australian Published Patent Application No. 48871/85 describes a saw with a linear guide mechanism which enables movement of a saw blade and motor assembly in either a forward or rearward direction.

There is a continuing need for improvement in the design and development of miter and cut-off saws that have linear guide assemblies.

### SUMMARY OF THE INVENTION

Preferred embodiments of the present invention comprise a power miter saw comprising a power miter saw according to claim 1.

### DESCRIPTION OF THE DRAWINGS

FIGURE 1 is a right side perspective view of a first example which is useful for understanding the invention, particularly illustrating the saw blade being located in the extended position away from the fence;
FIG. 2 is a right side perspective view of the example shown in FIG. 1, but illustrating the saw blade in a position near the fence;
FIG. 3 is a side elevation of the example shown in FIG. 1 with the saw blade in the extended position away from the fence;
FIG. 4 is a rear view of the example shown in FIG 1, with the saw blade away from the fence;
FIG. 5 is a right front perspective view of a second example which is useful for understanding the invention, particularly illustrating the saw blade being located in the extended position away from the fence;
FIG. 6 is a right front perspective view of the example shown in FIG. 5, but illustrating the saw blade in a position near the fence;
FIG. 7 is a side elevation of the example shown in FIG. 5 but illustrating the saw blade in a position near the fence;
FIG. 8 is a rear view of the example shown in FIG. 5, with the saw blade in a position away from the fence;
FIG. 9 is a third example which is useful for understanding the invention, particularly illustrating the saw blade being located in the extended position away from the fence;
FIG. 10 is a side elevation of the example shown in FIG. 9 with the saw blade in the extended position away from the fence.
FIG. 11 is another side elevation of the example shown in FIG. 9, with the saw blade near the fence;
FIG. 12 is a rear view of the example shown in FIG. 9, with the saw blade located away the fence:
FIG. 13 is a left perspective view of a first preferred embodiment that utilizes a geared hinge mechanism, and is shown with the blade and motor assembly in an extended position;
FIG. 14 is a right perspective view of the preferred embodiment shown in FIG. 13 with the saw blade and motor assembly in a retracted position;
FIG. 15 is a side plan view of the first preferred embodiment embodiment shown in FIG. 13, but illustrating the saw blade and motor assembly in an extended position;
FIG. 16 is a top view of the first preferred embodiment with the saw blade and motor assembly in its extended position;
FIG. 17 is a side view of a portion of a second preferred embodiment, particularly illustrating the geared hinge mechanism having sectored gears.

### DETAILED DESCRIPTION

Three examples which are useful for understanding the invention and two embodiments of the present invention are shown and described herein, with the each of the examples and the embodiments having a multiple hinge linkage that is designated herein as a horizontal hinge linkage that interconnects the saw blade and motor assembly to the table of the miter saw. It should be understood that while it is referred to herein as a generally horizontal hinge linkage, the several shafts of the linkage may not always be exactly horizontal, and may have a pivot axis that can vary up to about 30 degrees in either direction from exact horizontal. However, it is preferred that the axes be in a substantially horizontal orientation when the saw is set at a zero degree bevel position. Regardless of the bevel angle or the orientation of the surface on which the saw is supported, the shafts are preferably substantially parallel to the arbor shaft in which the blade is mounted and therefore substantially perpendicular to the plane of the saw blade.

The horizontal hinge linkage is utilized rather than an elongated rod and bushing configuration and provides increased stiffness to undesired movement of the saw blade arising from structural deflections during cutting operations. Two of the three examples also have a vertical hinge linkage for maintaining the elevation of the saw pivot head (to which the saw blade and motor assembly is attached) constant during movement of the saw blade and motor assembly away and toward the fence during a cutting operation. A third example utilizes the horizontal hinge linkage together with a single rod and bushing arrangement whereby the rod and bushing arrangement also maintains a constant elevation of the saw pivot head as the saw blade and motor assembly is moved toward and away from the fence during a cutting operation. It should be understood that the saw blade and motor assembly 22 is pivotable about a saw pivot that is part of the saw pivot head, which is attached to the horizontal hinge linkage. The saw blade and motor assembly can be pivoted up out of contact with a work piece or moved down into contact with a work piece during a cutting operation as is conventional for miter saws.

First and second preferred embodiments utilize a horizontal hinge linkage together with gear sets attached to the hinges, which because of their strategic attachment, maintain the saw blade and motor assembly at a substantially constant elevation during reciprocating movement in a normal cutting position.

Such hinge linkages have a cost advantage compared to conventional bushing and rod guides because they have a simpler construction, which may comprise as few as two generally planar shaped linkages that are connected together by shafts that may preferably incorporate rotary bushings or low cost ball bearings and which are also linked to the support frame of the rotatable table as well as to the saw pivot head. Tight tolerance fits between hinge components are relatively easier to achieve using low cost ball bearings that are preloaded in the axial direction so that nearly all axial and radial play is removed. In contrast, conventional bushings and sliding rod systems require expensive manufacturing processes to ensure that the outside surface of the rod is precise over its entire length. Another advantage of the use of hinge linkages is that their stiffness characteristics are determined primarily from the width of the hinge linkages as measured along the pivot, i.e., shaft axis. Thus, increased system stiffness can be achieved by making the hinge larger and this is generally less expensive than using larger rods and bushings.

As previously mentioned, the horizontal hinge linkage pivots around axes that are parallel to the cutting plane of the blade and therefore provides increased stiffness along the axis of rotation of the saw blade and because of this desirable characteristic, the length of the hinge shafts is greater than other shaft lengths such as those used in the vertical hinge linkage. The structural stiffness is very important to the quality of cuts made by the saw. Without the requisite structural stiffness, it is common for the saw blade to deflect out of the desired cutting plane on an intermittent basis which can result in one or more cut discontinuities or jagged cut portions, rather than a continuous smooth cut at the desired angle.

Another advantage of the hinge linkage is that it has greatly reduced sensitivity to dirt and grit because the bearing surfaces of a hinge linkage are not exposed but are contained within a ball bearing or short rotary bushing. Such ball bearing or rotary bushings can be relatively easily sealed compared to a rod and bushing system where the entire rod is a critical bearing surface and therefore has to be sealed with a large accordion or bellow shaped fabric or other type of cover which is often easily damaged.

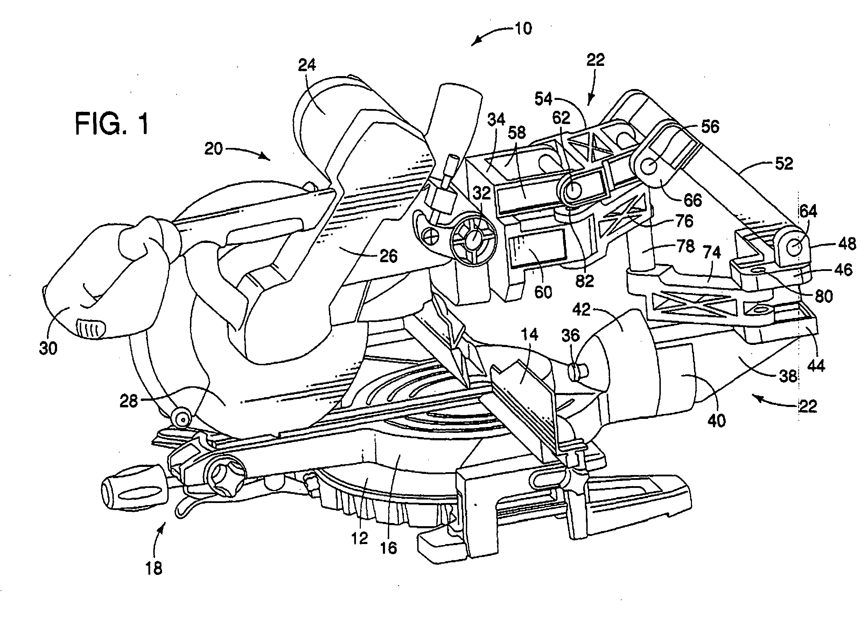

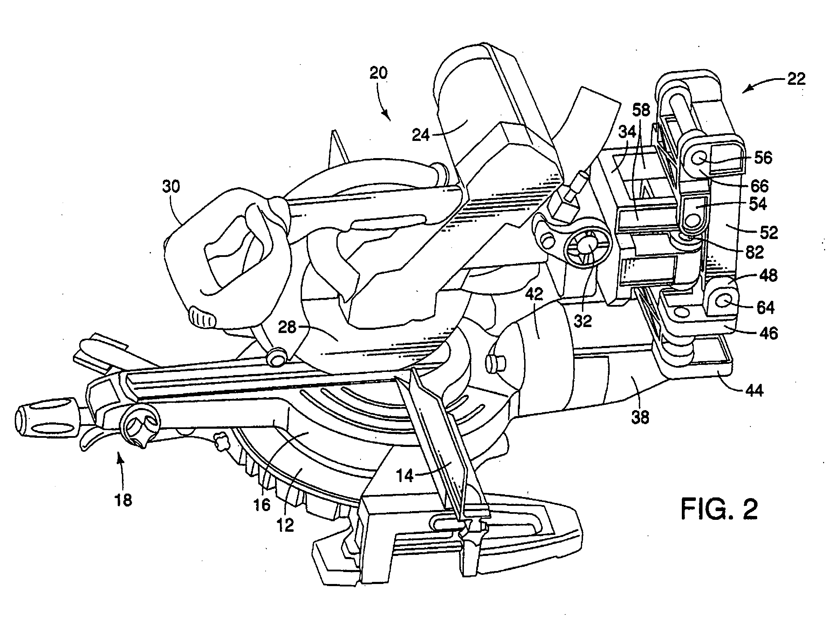

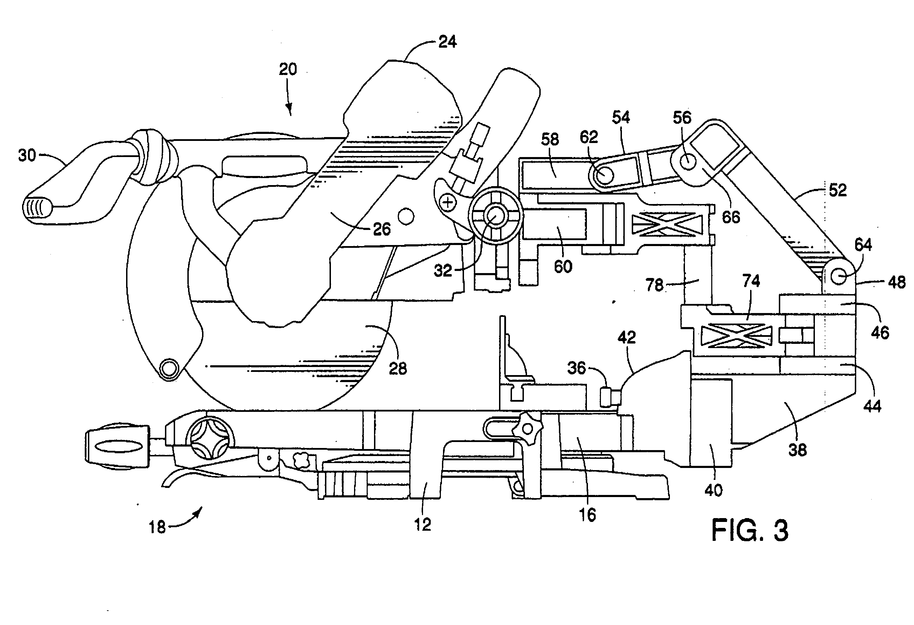

Turning now to the first example which is useful for understanding the invention shown in FIGS. 1-4, the miter saw, indicated generally at 10, has a generally circular base 12 with an attached fence 14, which base supports a rotatable table 16 that has a miter arm control assembly, indicated generally at 18, for adjusting the rotational position of the table for setting the miter angle of work piece that would be placed on the table 16. A saw blade and motor assembly, indicated generally at 20, is operatively connected to the table 16 by a linear guide mechanism, indicated generally at 22. The saw blade and motor assembly 20 has an electric motor 24 that is operatively connected through a gear mechanism, not shown but located within housing portion 26 that drives a saw blade 28. A handle 30 enables an operator to move the blade and motor assembly 20 into and out of engagement with a work piece that may be placed on the table 16 adjacent the fence 14. The blade and motor assembly 20 is pivotable about a saw pivot shaft 32 that is connected to a saw pivot head 34 to which the linear guide mechanism 22 is attached. The blade and motor assembly 20 is shown in FIG. 1 to be in a position where the blade is moved to its extended position away from the fence 14 and lowered into cutting position were a work piece placed on the table 16. During operation, an operator places a work piece on the table 16, brings the handle 30 down into cutting position either before or after activating the motor 24 and then pushes the handle 30 toward the fence 14 to have the blade 28 cut the work piece. At the end of the cut, the blade and motor assembly 20 would be essentially in the position shown in FIG. 2 where the bottom reach of the blade 28 is generally coextensive with the fence 14.

The linear guide mechanism 22 of the first example shown in FIGS. 1-4 is designed so that the miter saw has a dual bevel operation, rather than a single bevel operation, meaning that the bevel angle can be adjusted either right or left from the normal zero angle or position wherein the plane of the blade 28 is perpendicular to the plane of the top surface of the table 16. The blade and motor assembly 20 as well as the linear guide mechanism and rotate about a bevel pivot shaft 36, with the linear guide mechanism having a support frame 38 with a generally cylindrical end portion 40 to which the bevel pivot shaft 36 is connected to. The shaft 36 extends through an opening in an enlarged extension 42 of the table 16. Thus, the end portion 40 can rotate relative to the extension 42 and be supported by the shaft 36. The support frame 38 is preferably a casting that has a lower flange 44, an upper flange 46 as well as vertically oriented flanges 48 and 50.

A horizontal hinge linkage is comprised of links 52 and 54 which have adjacent ends connected together by a shaft 56. The saw pivot head 34 has a pair of spaced flanges 58 as well as a single flange 60 located below the flanges 58. The link 54 has its opposite end connected to the flanges 58 by a shaft 62. Similarly, the opposite end of the link 52 is connected to the vertical flanges 48 and 50 by a shaft 64. As previously mentioned and while not specifically illustrated, the shafts 32, 62, 56, 64, 78 and 82 are preferably of the type which utilize rotary bushings or low cost ball bearings so that they are freely rotatable and will have an extended useful life.

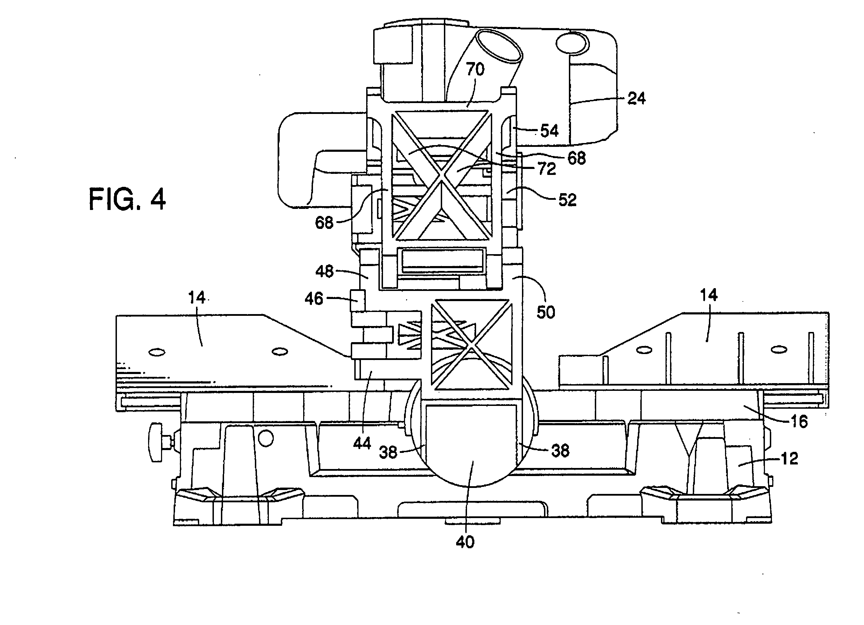

As is best shown in FIGS. 1 and 2, the link 52 has a generally L-shaped side configuration with the transverse extension 66 having the aperture in which the shaft 56 is located. This permits the two links 52 and 54 to be folded together in a generally parallel arrangement as shown in FIG. 2 when the blade and motor assembly 20 is moved into its final cutting position where the blade is adjacent to the fence 14. As is best shown in FIG. 4, the width of the links 52 and 54 is relatively large and therefore the shafts 56, 62 and 64 that interconnect the links 52 and 54 with one another and with the saw pivot head 34 and support frame 38 are relatively long. This contributes to the desirable stiffness of the linear guide mechanism which substantially reduces, if not eliminates, any movement by the blade out of the cutting plane which can result in poor quality cutting. Stated in other words, the extremely wide links and their coupling to the saw pivot head and support frame 38 results in high rigidity reducing torsional and linear deflection of the saw blade away from its intended cutting plane which is very desirable from a cut quality standpoint.

As best shown in FIG. 4, the link 52 is not a solid construction, but has side walls 68 and end walls 70 with cross braces 72 provided to provide increased overall strength for the link. The link 54 is similarly constructed as is shown in FIG. 1, it also having similarly configured side walls, end walls and cross braces. The hinge links 52 and 54 are preferably die cast aluminum but can be steel stamping if desired.

The vertical hinge linkage is located below the horizontal hinge linkage and it comprises links 74 and 76 which have adjacent ends connected together by a vertical shaft 78. The links 74 and 76 are not as wide as the horizontal hinge links 52 and 54 for the reason that their functionality is to maintain the elevation of the saw pivot head 34 constant during movement of the blade and motor assembly 20 toward and away from the fence 14. Elevational deflections are not as critical for a miter saw cut quality for the reason that the work piece is generally being completely cut through.

The narrower links 74 and 76 are vertically displaced from one another which requires the elongated vertical shaft 78 to extend to interconnect them. The link 74 is located between the horizontal flanges 44 and 46 and is pivotally connected to these flanges by a shaft 80. Similarly, the link 76 has spaced flange portions that are connected to the flange 60 by a shaft 82. As is shown in FIG. 1, the flange 60 is located beneath the near flange 58 and the flanges 44 and 46 are also located beneath the vertical flanges 48 and 50, and the shaft 78 that interconnects the links 74 and 76 extends away or to the left side of the saw (as viewed from the handle 30) so that when the vertical and horizontal linkages are folded together as shown in FIG. 2, little if any portion of the links extend outside of the width of the flanges 48 and 50. This is significant in that changing of the bevel angle of the blade and motor assembly 20 can be accomplished in either the left or right direction and the hinge linkages will not interfere with the dual bevel adjusting capability.

It should also be apparent from FIG. 2 that when the blade and motor assembly 20 are moved as far toward the fence 14 as is possible, the linkages do not extend in any rearward direction beyond the original position end of the support frame 38. This enables the miter saw to be placed near a wall, for example, and be fully operational, unlike many conventional sliding rod and bushing configurations of compound miter saws.

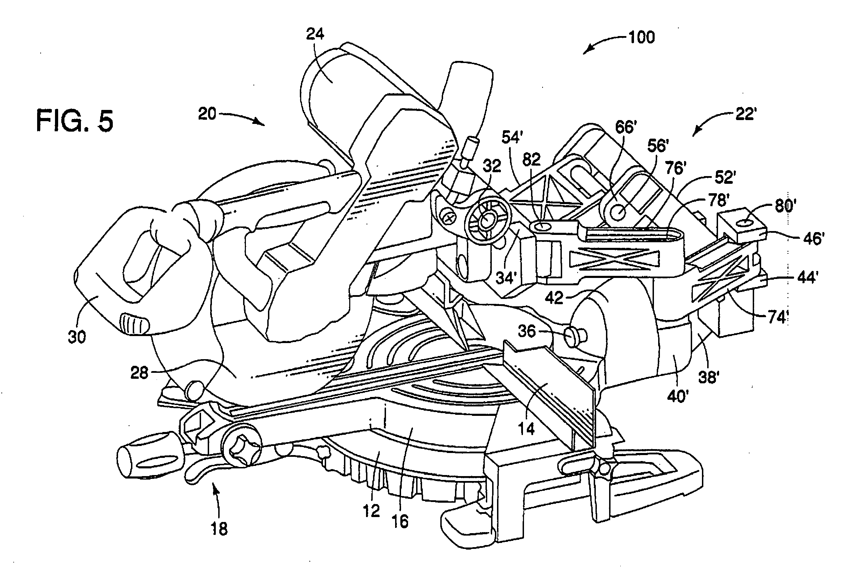

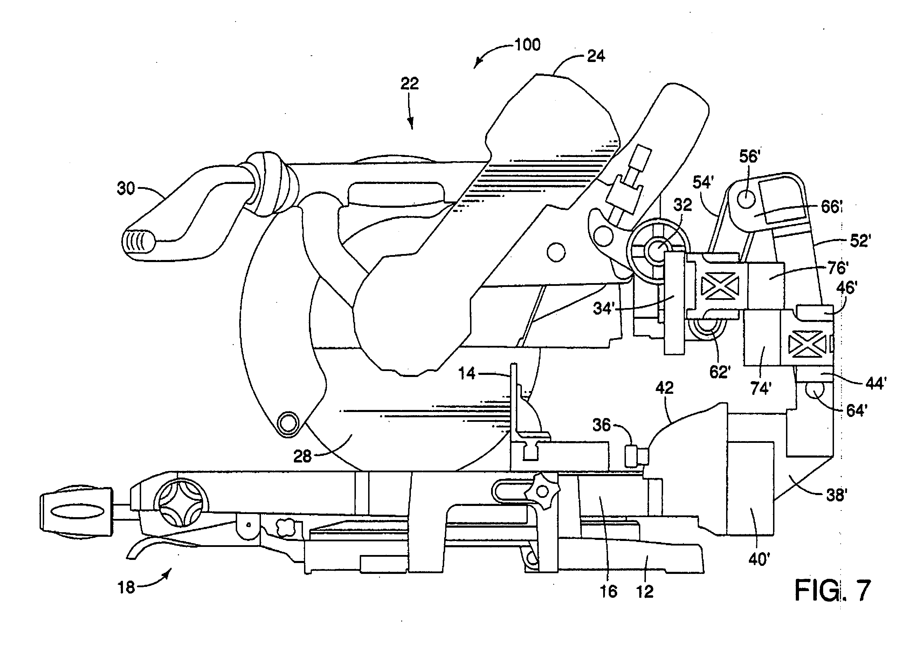

A second example which is useful for understanding the invention is shown in FIGS. 5-8 and have many similar components as the example shown in FIGS. 1-4. In the following description, components that are labeled with the same numbers as those shown and described with regard to the first example are substantially similar in their design, configuration and operation and therefore will not be described in detail. Components with reference numbers having a prime or double prime designation are similar to those that are identified with regard to the example shown in FIGS. 1-4, but may have some structural differences which are apparent or which will be generally described.. or which will be given different numbers than those illustrated in FIGS. 1-4.

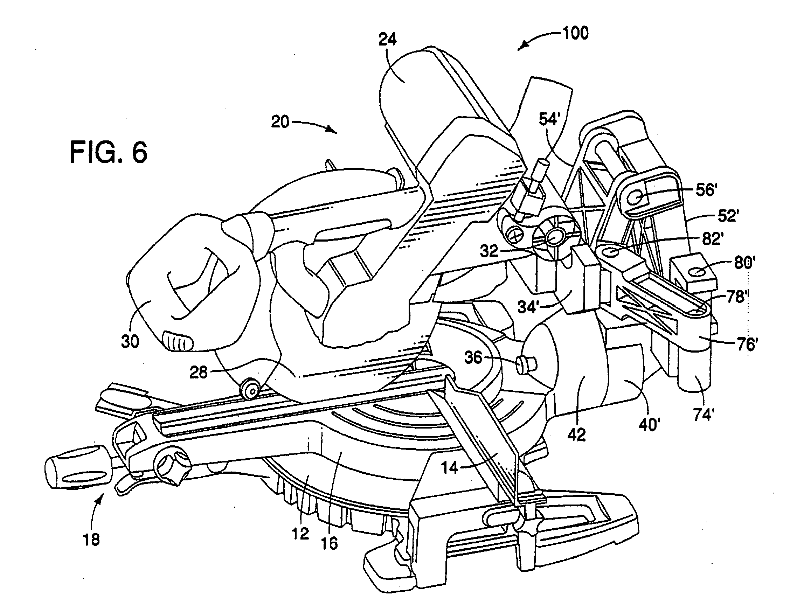

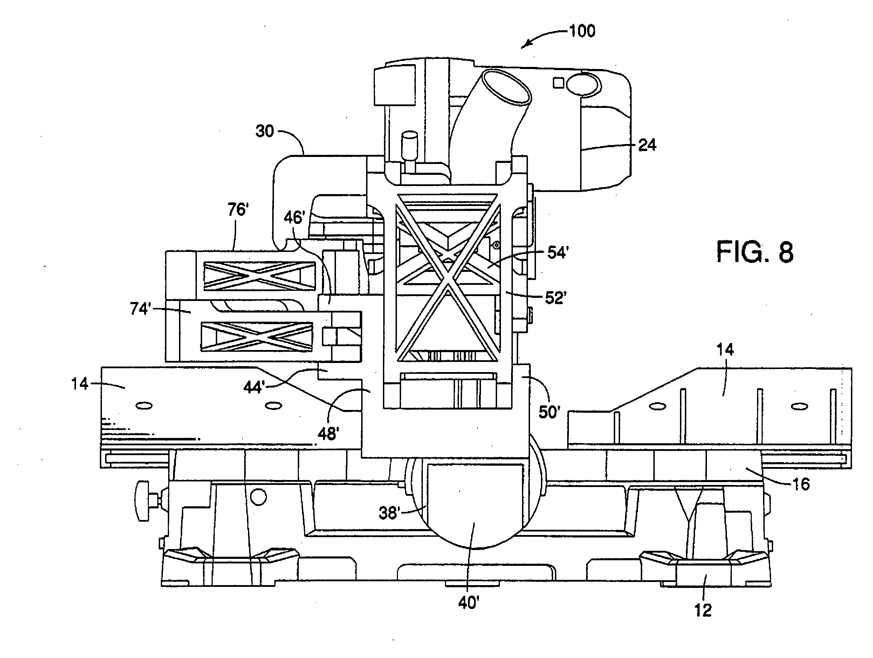

The second example is indicated generally at 100 in FIGS. 5-8 and has many similarities to the first example, but while the first example is a dual bevel configuration saw, the second embodiment saw 100 is a single bevel configuration. The links 74' and 76' are connected together by a shaft 78' that is not as long as the shaft 78 of the first example, because the links 74' and 76' are vertically adjacent one another rather than being spaced apart. Also, the link 76' is at an elevation that is substantially similar to the elevation of the link 54' and therefore unable to fold toward the link 52" and 54'. Thus, the connection between link 74' and 76' extends outwardly away from the links 52' and 54'. Because of the outward extension, particularly when it is folded as shown in FIGS. 6 and 8, the links interfere with other portions of the saw 100 when the saw would be pivoted in the counterclockwise direction as shown in FIG. 8. Therefore, the single bevel operation of this second example is in the clockwise direction as shown in FIG. 8.

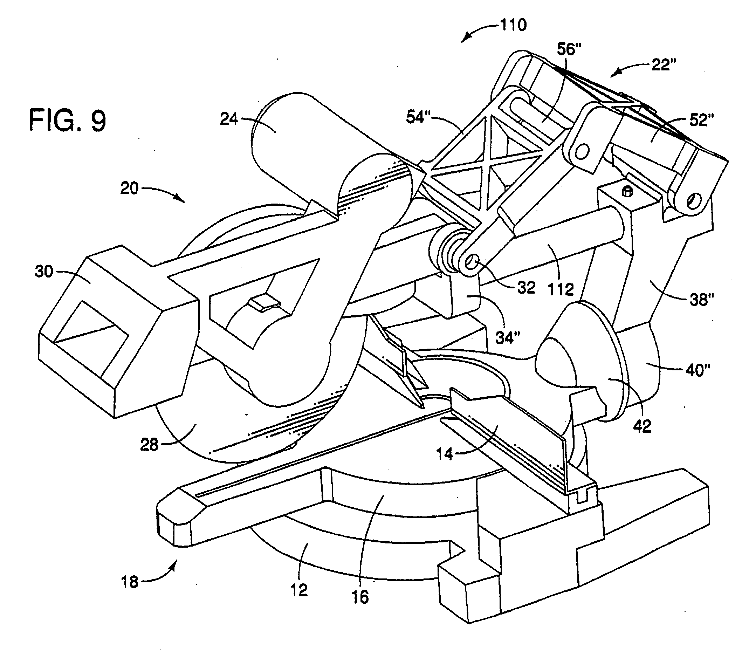

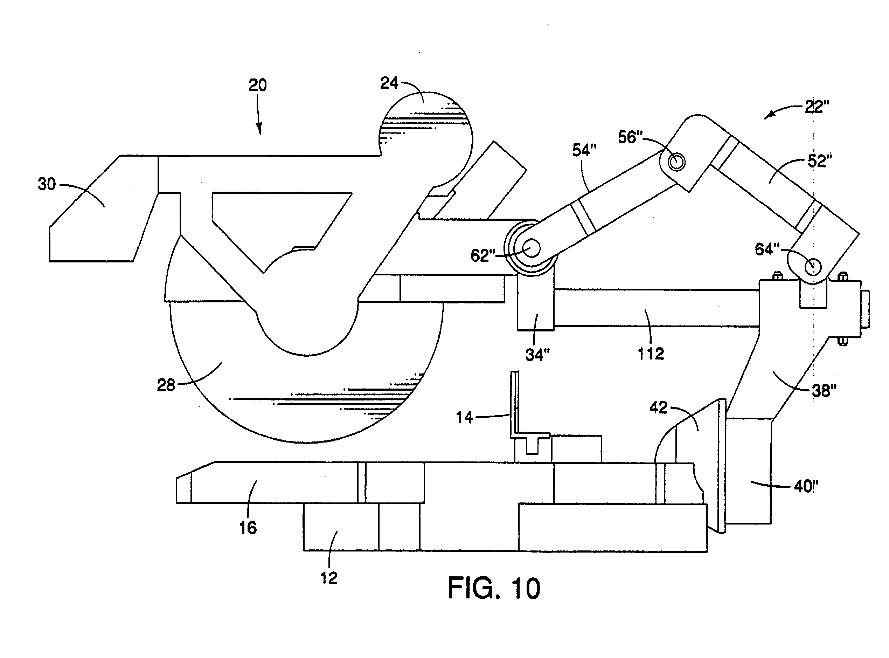

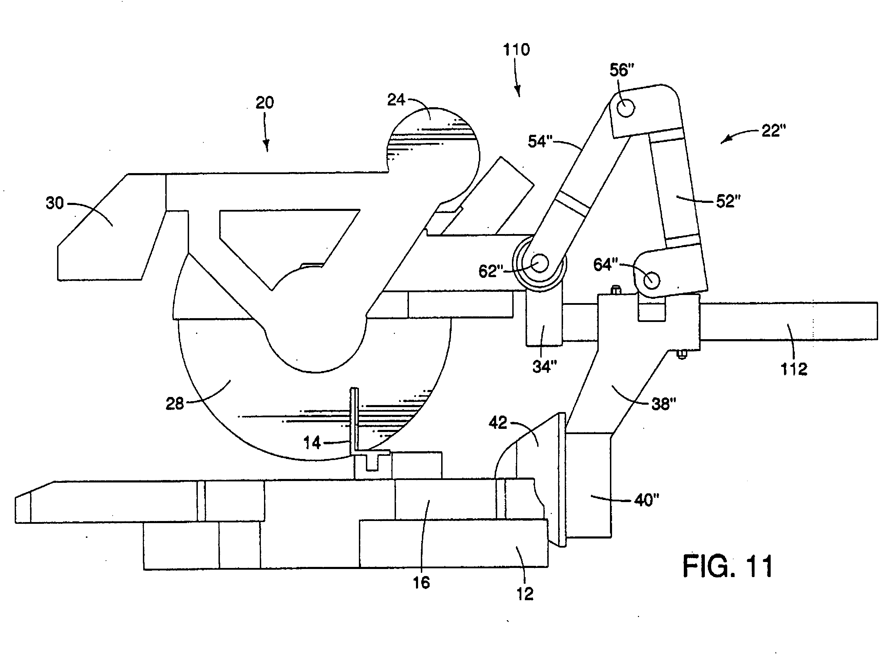

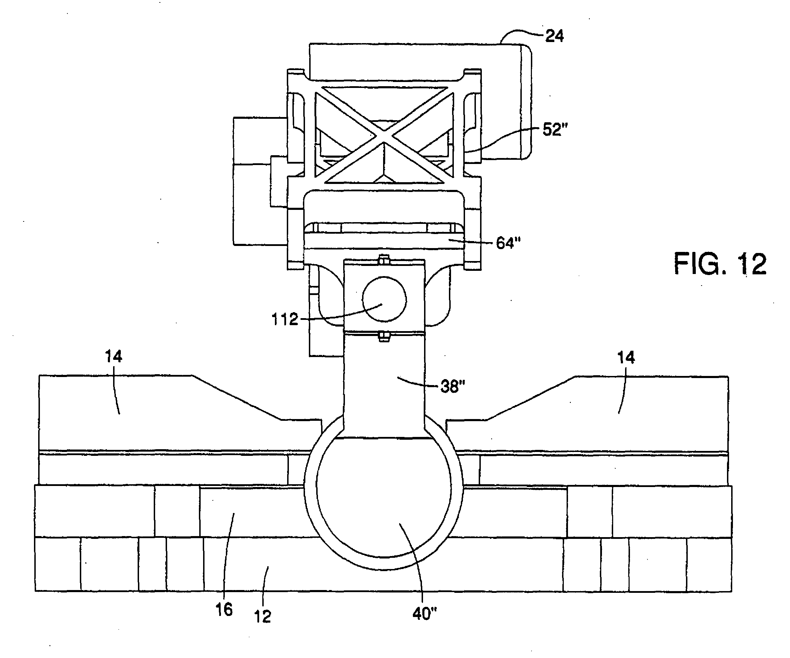

A third example which is useful for understanding the invention is the saw 110 that is shown in FIGS. 9-12 is less detail than the examples of FIGS. 1-8. Saw 110 has a horizontal hinge linkage comprising links 52" and 54" that are interconnected and operate substantially similar to those described in the examples of FIGS. 1-8. The saw pivot head 34" has a slightly different configuration and the end of the link 54" is connected to the saw pivot shaft 32 which is also journaled in the saw pivot head 34". An elongated rod 112 is journaled in a bushing (not shown but located in the upper end of support frame 38) and maintains the saw pivot head 34" at a constant elevation as the blade and motor assembly 22 moves the blade 28 toward the fence 14. Only one rod 112 is provided for the reason that control of the saw blade cutting plane is provided by the horizontal hinge linkage, as is the case with the other examples shown in FIGS. 1-8, and the only function that is performed by the rod 112 is to keep the pivot head 34" at a constant elevation during operation. In this regard, the blade and motor assembly 20 is shown in its retracted position in FIGS. 9 and 10 and in the cutting position in FIG. 11 where the blade 28 is adjacent the fence 14. In the position shown in FIG. 11, it is apparent that the rod 112 will extend beyond the rear surface of the support frame 38" which requires a larger footprint in that it would not be possible to place the saw 110 with the support frame 38" located close to a wall or other similar surface. Thus, while this example does not have the space advantages of the first and second examples, this example has the advantage of controlling the saw blade cutting plane by a generally horizontal hinge as is achieved in all examples and only one rod and bushing combination is required which provides a cost benefit compared to conventional arrangements which have a pair of rod and bushing configurations.

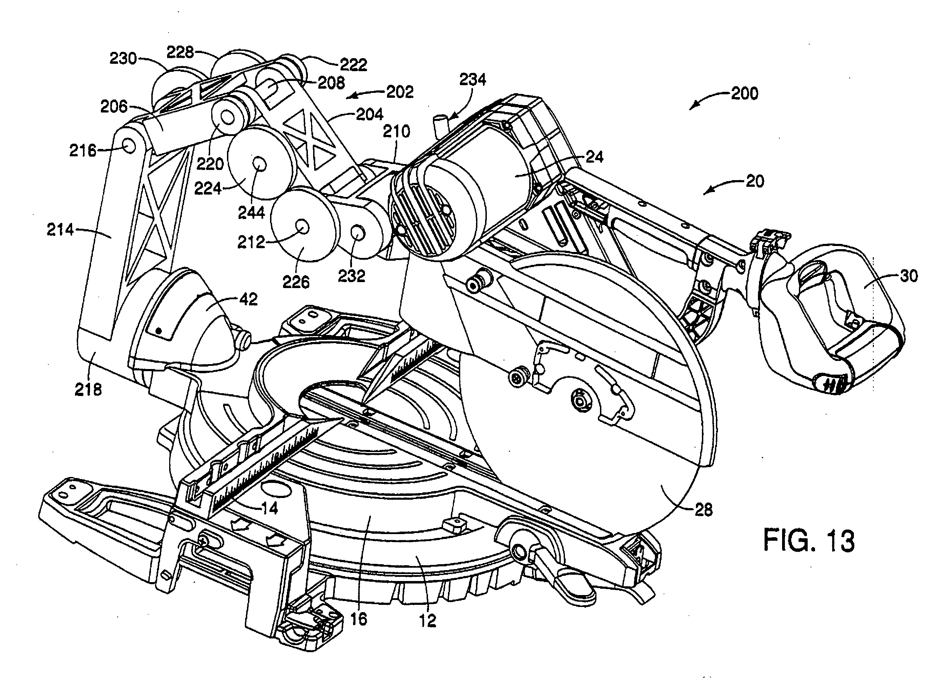

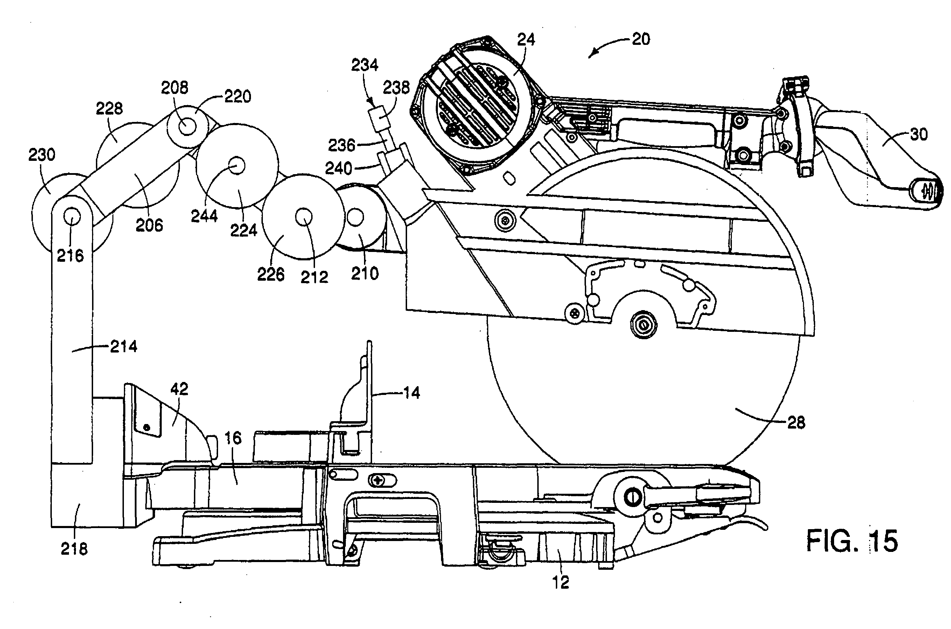

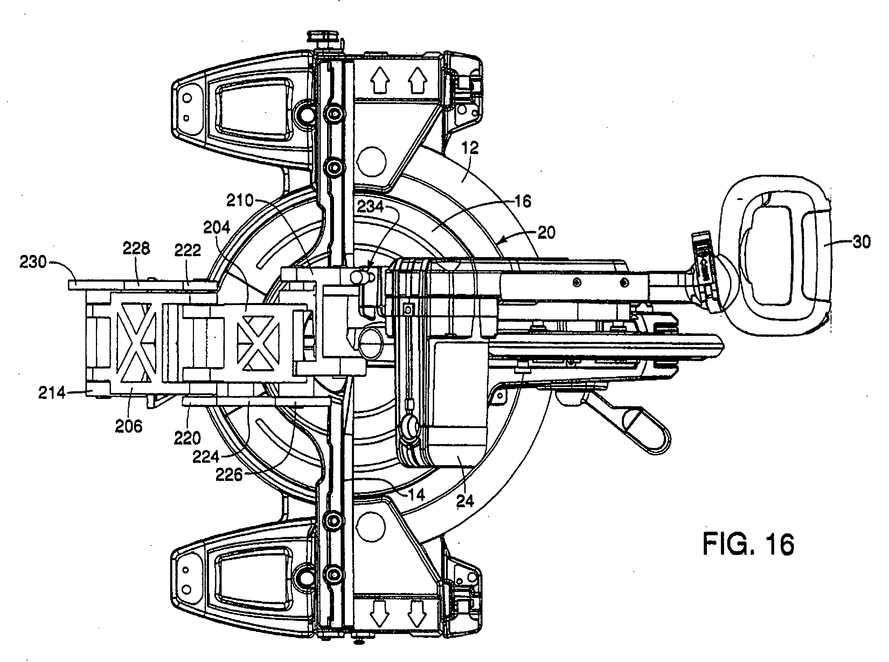

A first preferred embodiment of the invention is shown in FIGS. 13-16 and is indicated generally at 200. Many of the components are similar to the example 10 so that where reference numbers are the same as the description of the FIG. 1 example, such components and their functionality are very similar if not identical. Components with reference numbers above 200 are sufficiently different from the other examples or are new in the first preferred embodiment. The saw 200 has a linear guide mechanism 202 that comprises a multiple link hinge that includes a front hinge 204 and a rear hinge 206 that are interconnected by a shaft 208. The front hinge 204 is also pivotally connected to a pivot block 210 by a shaft 212 and the rear hinge 206 is connected to a vertical stand 214 by shaft 216.

The vertical stand 214 has its lower end attached to or integrally formed with a cylindrical support frame 218 that is mounted to an enlarged extension 42 that is a part of the table 16. A shaft (not shown) enables the cylindrical portion 218 and vertical stand 214 to rotate relative to the table so that the blade and motor assembly 20 can perform bevel cuts in either direction. The shaft 208 that pivotally interconnects the front hinge 204 to the rear hinge 206 is also concentric with the axis of a gear 220 mounted on its left side and a gear 222 on the right side. The left gear 220 is non-rotatably attached to the rear hinge 206 whereas the right gear 222 is non-rotatably attached to the front hinge 204. The gear 222 is non-rotatably attached to shaft 208 which is non-rotatably attached to the front hinge 204.

The gear 220 meshes with an idler gear 224 that in turn meshes with a gear 226 that is non-rotatably attached to the pivot block 210. The gear 226 is non-rotatably attached to the shaft 212 which in turn is non-rotatably attached to the pivot block 210. Similarly, the right side gear 222 meshes with an idler gear 228 which in turn meshes with a gear 230 that is non-rotatably attached to the vertical stand 214. The idler gear 224 rotates about shaft 244 that is attached to the hinge 204 and the idler gear 228 rotates about shaft 246 that is attached to the rear hinge 206. The pivot block 210 is connected to the blade and motor assembly 20 by a shaft 232. While not shown, it is preferably spring loaded so that the blade and motor assembly is biased in its upward normal rest position but can be moved downwardly by an operator manipulating the handle 30.

The saw has a stop mechanism, indicated generally at 234, that comprises an elongated screw member 236 having an enlarged knob 238 at its upper end, with the elongated screw member 236 being threadedly connected to a bracket extension 240 of the blade and motor assembly 20. The bottom end of the elongated screw member 236 contacts a flange 242 that is preferably formed as a part of the pivot block 210 for limiting the downward reach of the blade 28 during operation. Since the stop mechanism 234 can be adjusted by rotating the knob 238, the degree of penetration of the blade in the illustrated slot of the table 16 can be adjusted.

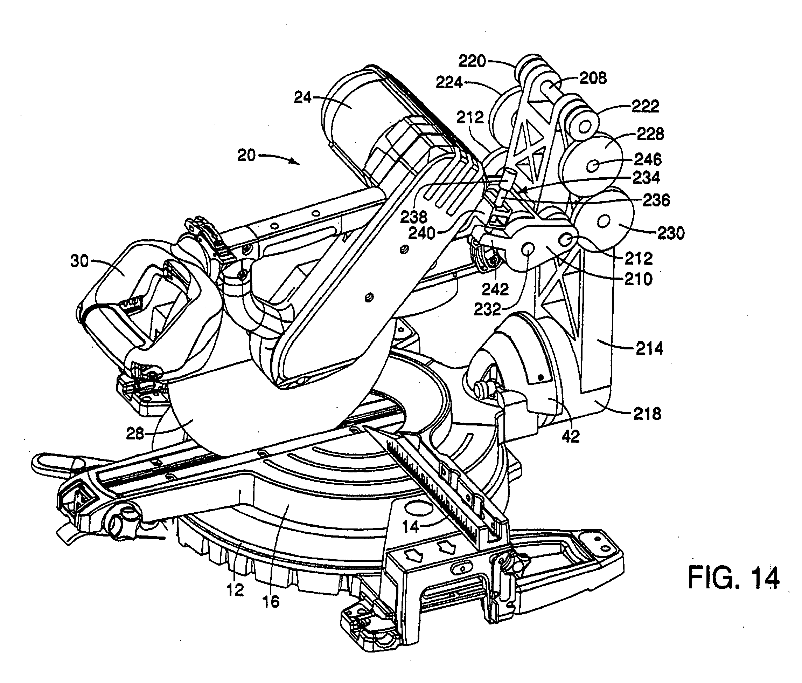

With the geared hinges configured as described, the three gears 220, 224 and 226 on the left side of the linear guide mechanism 20 act in such a manner that the pivot block 210 is kept at a constant angular orientation with respect to the table 16. This gear set creates rotation about the pivot block mounting shaft 232 that negate any rotation of the pivot block that would otherwise occur when the front and rear hinges rotate relative to one another. This acts to maintain the pivot block 210 at a constant angle with respect to the table as the blade and motor assembly 20 are moved to the extended position shown in FIGS. 13, 15 and 16, or the retracted position which is shown in FIG. 14.

The gear ratio of the gear 220 relative to gear 226 is one-half. The size of the idler gear 224 is unimportant inasmuch as it merely transmits the rotation from the smaller gear 220 to the larger gear 226. When the rear hinge 214 rotates with respect to the front hinge 204, the rearward gear 220 undergoes the same amount of rotation as the amount of rotation of the front hinge has with respect to the rear hinge. That rotation is multiplied by one-half through the gear ratio and is transmitted to the idler gear 224 on the front hinge 204 and then to the forward gear 212 that turns the pivot block.

The pivot block is held at a constant elevation with respect to the table 16 during the entire travel of the linear guide mechanism 202 because the pivot block 210 mounting shaft is held at a constant height through the action of the three gears 222, 228 and 230 mounted on the right side of the hinge 206. These gears accomplish this by causing the front hinge 204 to pivot through an angle with respect to the back hinge 206 that is twice the angle that the back hinge pivots with respect to the bevel vertical stand 214. When the hinges of equal length and the phase angle between the gears is such that the two hinges would perfectly overlap if the rear hinge was vertical, the pivot block 210 remains at a constant elevation. Other combinations of hinge lengths and hear ratios are possible.

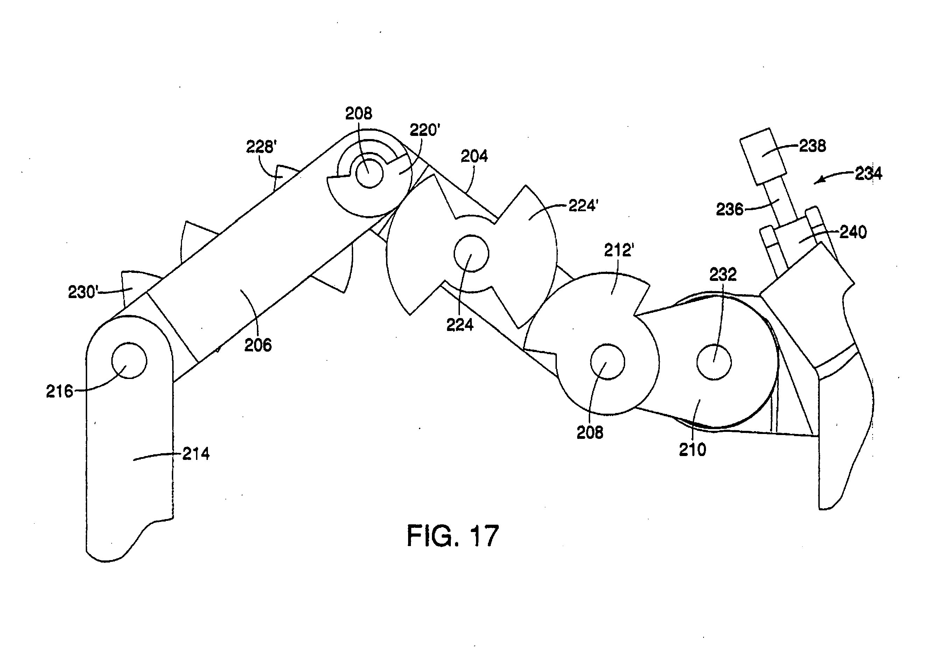

Because of the design of the linear guide mechanism 202, there is a natural tendency for the blade and motor assembly 20 to gravitate toward the extended position. To counteract this tendency, it is therefore preferred to have at least one spring or other biasing mechanism provided to neutralize this tendency. In this regard, a torsion spring in one of the pivot connections may be provided or a tension spring interconnecting the rear hinge 206 with the pivot block 210 may be used, for example. A second embodiment is shown in FIG. 17 and is similar to the first embodiment except that instead of full circular gears, the gears 224', 212' and 220' as well as gears 222' (not shown), 228' and 230' are sector gears. Their attachment is otherwise identical. They can be sector gears because the amount of rotation is not complete. In other words, the operability of the geared hinges 204 and 206 is the same as has been described with respect to the embodiment shown in FIGS. 13-16.

It should also be understood that the gears that are non rotating with respect to certain structures, namely gears 212', 220', 222' and 230' may be formed as a part of the structure that they are attached to. In that regard, the gear teeth which are not shown in either the first or second embodiments could be formed during casting or the teeth could be cut by the process of hobbing. Also, the interaction of the gears with one another is diagrammatically illustrated in FIGS 13-17 without individual teeth being shown. Accordingly, it should be understood that if the teeth were illustrated in a meshing relationship, the outer circumference of the meshed gears would not be touching as illustrated, but would have the outer circumference shown to be slightly overlapped by an amount dictated by the depth of the teeth. Also, it should be understood that rubber belts, timing belts or even chains could be used if the same pulley ratios are used. With those alternatives, idler gears would be unnecessary.

While two embodiments of the present invention have been shown and described, it should be understood that other modifications, substitutions and alternatives are apparent to one of ordinary skill in the art. Such modifications, substitutions and alternatives can be made without departing from the scope of the invention, which should be determined from the appended claims.

Various features of the invention are set forth in the following claims.

## Claims

1. A power miter saw (200) comprising:
a saw base (12) having a fence (14) for positioning a work piece;
a table (16) rotatably connected to said saw base (12);
a miter arm assembly (18) for angularly positioning said table relative to said saw base (12);
a saw blade and motor assembly (20) operatively connected to said table (16);
a linear guide mechanism (202) attached to said table (16) and being configured to support said saw blade and motor assembly (20) and enable movement of said assembly (20) along a predetermined linear path in either a forward or a rearward direction;
said mechanism (202) having a pivot block (210) with a first pivot axis generally perpendicular to the plane of said saw blade (28) about which said saw blade and motor assembly (20) is pivotable to move a saw blade (28) vertically into and out of cutting position which maintains said pivot block (210) at a generally constant elevation during movement in said forward and rearward directions; **characterized in**
said mechanism (202) having a multiple link hinge (204, 206) pivotally interconnecting said pivot block (210) and said table (16) with pivot axes that are parallel to one another and with said first pivot axis;
said mechanism (202) having a gear set (220, 222, 224, 226, 228, 230) operatively connected to said multiple link hinge (204, 206) .

2. A power miter saw (200) as defined in claim 1 wherein said multiple link hinge (204; 206) comprises a front hinge (204) and rear hinge (206) that are pivotally connected together about a first axis, said front hinge (204) being pivotally connected to said pivot block (210) about a second axis and said rear hinge (206) being pivotally connected to said table (16) about a third axis, said gear set (220, 222, 224, 226, 228, 230) comprising:
a first gear (220) non-rotationally connected to said rear hinge (206) concentric with said first axis;
a second gear (226) non-rotationally connected to said pivot block (210) concentric with said second axis;
a third rotatable idler gear (224) mounted to said front hinge (204) and engaging said first and second gears (220; 226);
a fourth gear (222) non-rotationally connected to said front hinge (204) concentric with said first axis;
a fifth gear (230) non-rotationally connected to said table (16) concentric with said third axis;
a sixth rotatable idler gear (228) mounted to said rear hinge (206) and engaging said fourth and fifth gears (222; 230);
said gears being sized to maintain said pivot block (210) at a generally constant elevation when it is moved in said forward an rearward directions.

3. A power miter saw (200) as defined in claim 2 wherein the distance between said first and second axes is equal to the distance between said first and third axes.

4. A power miter saw (200) as defined in claim 3 wherein the diameter of said first gear (220) is one half the diameter of said second and third gears (226; 224).

5. A power miter saw (200) as defined in claim 1 wherein the angle between said front and rear hinges (204; 206) varies between approximately 20 degrees and 110 degrees.

6. A power miter saw (200) as defined in claim 1 wherein said table (16) comprises a rear extension (42) that has a pivoting connection generally in the horizontal orientation and an upwardly extending post (214) to which said rear hinge (206) is pivotally attached, said rear extension pivoting connection permitting said saw blade and motor assembly (20) to be tilted to make bevel cuts.

7. A power miter saw (200) as defined in claim 2 wherein any one or more of said gears (220, 222, 224, 226, 228, 230) have teeth extending around the circumference thereof.

8. A power miter saw (200) as defined in claim 2 wherein any one or more of said gears (220, 222, 224, 226, 228, 230) is a sector gear having teeth through only a portion of said circumference thereof.

9. A power miter saw (200) as defined in claim 2 wherein any one or more of said first, second, fourth and fifth gears (220; 226; 222; 230) is integrally formed with the structure to which said gear is non-rotationally attached.

10. A power miter saw (200) as defined in claim 1 further comprising a first stop surface on said pivot block (210) and a second stop surface on said saw blade and motor assembly (20) configured to contact one another to limit the downward pivotable movement of said saw blade and motor assembly (20).

11. A power miter saw (200) as defined in claim 10 wherein at least one of said stop surfaces is adjustable to vary the limit of movement of said saw blade and motor assembly (20).

12. A power miter saw (200) having adjustable miter and bevel angle cutting capability as defined in claim 1 wherein said table (16) is pivotally connected to said saw base (12) to vary the miter angle of cut;
said pivot block (210) is mounted to a first shaft (232) oriented transversely relative to the plane of the blade (28), said saw blade and motor assembly (20) is pivotable on said first shaft (232) to move a saw blade (28) into and out of position to cut the work piece;
said mechanism (202) connecting said table (16) with said pivot block (210) by a front and rear hinge (204; 206), said front hinge (204) is pivotally connected to said pivot block (210) and said rear hinge (206) is pivotally connected to said table (16) with shafts (208, 212, 216, 232) that are parallel to one another and generally perpendicular to the plane of said blade (28);

13. A power miter saw (200) as defined in claim 12 wherein the angle between said front and rear hinges (204; 206) changes as said saw blade and motor assembly (20) is moved in said forward and rearward directions, said gear elements (220, 222, 224, 226, 228, 230) operating to maintain the angular orientation and the elevation of said pivot block (210) substantially constant during said movement.

14. A power miter saw (200) as defined in claim 12 wherein said plurality of gear elements (220, 222, 224, 226, 228, 230) comprises a gear element (220; 222; 226; 230) located at each end of each of said front and rear hinges (204; 206), and an idler gear element (224; 228) interconnecting the gear elements at each end.

15. A power miter saw (200) as defined in claim 14 wherein said gear elements (226; 230) that are located nearest to said pivot block (210) and table (16) are respectively non-rotationally connected thereto and the gear element (220; 222) that interconnects with one of said idler gear elements (224; 228) is non-rotationally attached to said hinge (204; 206) having the non-interconnected idler gear element (224; 228).

16. A power miter saw (200) as defined in claim 12 wherein said gear elements (220, 222, 224, 226, 228, 230) comprise at least circular gear sectors having gear teeth on the outer portion thereof.

17. A power miter saw (200) as defined in claim 15 wherein said gear element (226) that is connected to said pivot block (210) is integrally formed with said block (210).

18. A power miter saw (200) as defined in claim 15 wherein said gear element (230) that is connected to said table (16) is integrally formed with said table (16).

19. A power miter saw (200) as defined in claim 15 wherein said gear element (220; 222) that is non-rotationally connected to one of said hinges (204; 206) is integrally formed with said hinge (204; 206).

## Patentansprüche

1. Elektrische Gehrungssäge (200), aufweisend:
eine Sägenbasis (12), welche einen Anschlag (14) zum Positionieren eines Werkstückes aufweist;
einen Tisch (16), welcher mit der Sägenbasis (12) drehbar verbunden ist;
einen Gehrungsarmzusammenbau (18) zum winkelmäßigen Positionieren des Tisches bezüglich der Sägenbasis (12);
ein Sägenblatt und ein Motorzusammenbau (20), welche mit dem Tisch (16) wirkverbunden sind;
einen Linearführungsmechanismus (202), welcher an dem Tisch (16) befestigt ist und ausgebildet ist, um das Sägenblatt und den Motorzusammenbau (20) zu tragen und der eine Bewegung des Zusammenbaus (20) entlang eines vorherbestimmten linearen Pfades entweder in eine Vorwärtsrichtung oder in eine Rückwärtsrichtung ermöglicht;
wobei der Mechanismus (202) einen Drehblock (210) mit einer ersten Drehachse aufweist, welche im Wesentlichen rechtwinklig zu der Ebene des Sägenblattes (28) ist und um die das Sägenblatt und der Motorzusammenbau (20) drehbar sind, um das Sägenblatt (28) vertikal in und aus der Schneidposition zu bewegen,
wobei der Mechanismus (202) den Drehblock (210) in einer im Wesentlichen konstanten Höhe während einer Bewegung in die Vorwärts- und Rückwärtsrichtung hält,
**dadurch gekennzeichnet, dass**
der Mechanismus (202) ein vielfaches Scharniergelenk (204, 206) aufweist, welches den Drehblock (210) und den Tisch (16) mit Drehachsen drehbar miteinander verbindet, welche parallel zueinander und zu der ersten Drehachse sind;
wobei der Mechanismus (202) ein Getriebe (220, 222, 224, 226, 228, 230) aufweist, welches mit dem vielfachen Scharniergelenk (204, 206) wirkverbunden ist.

2. Elektrische Gehrungssäge (200) nach Anspruch 1,
wobei das vielfache Scharniergelenk (204, 206) ein vorderes Gelenk (204) und ein hinteres Gelenk (206) aufweist, welche über eine erste Achse drehbar miteinander verbunden sind,
wobei das vordere Gelenk (204) mit dem Drehblock (210) über eine zweite Achse drehbar verbunden ist und das hintere Gelenk (206) mit dem Tisch (16) über eine dritte Achse drehbar verbunden ist, wobei das Getriebe (220, 222, 224, 226, 228, 230) aufweist:
ein erstes Zahnrad (220), welches konzentrisch zu der ersten Achse mit dem hinteren Gelenk (206) nicht drehbar verbunden ist;
ein zweites Zahnrad (226), welches konzentrisch zu der zweiten Achse mit dem Drehblock (210) nicht drehbar verbunden ist;
ein drittes drehbares Zwischenrad (224), welches an dem vorderen Gelenk (204) befestigt ist und in das erste und zweite Zahnrad (220; 226) eingreift;
ein viertes Zahnrad (222), welches konzentrisch zu der ersten Achse mit dem vorderen Gelenk (204) nicht drehbar verbunden ist;
ein fünftes Zahnrad (230), welches konzentrisch zu der dritten Achse mit dem Tisch (16) nicht drehbar verbunden ist;
ein sechstes drehbares Zwischenrad (228), welches an dem hinteren Gelenk (206) befestigt ist und in das vierte und fünfte Zahnrad (222, 230) eingreift;
wobei die Zahnräder dimensioniert sind, um den Drehblock (210) in einer im Wesentlichen konstanten Höhe zu halten wenn er in die Vorwärts- und Rückwärtsrichtung bewegt wird.

3. Elektrische Gehrungssäge (200) nach Anspruch 2,
wobei die Distanz zwischen der ersten und zweiten Achse gleich der Distanz zwischen der ersten und dritten Achse ist.

4. Elektrische Gehrungssäge (200) nach Anspruch 3,
wobei der Durchmesser des ersten Zahnrades (220) die Hälfte des Durchmessers des zweiten und dritten Zahnrades (226; 224) ist.

5. Elektrische Gehrungssäge (200) nach Anspruch 1,
wobei der Winkel zwischen dem vorderen und hinteren Gelenk (204; 206) etwa zwischen 20 Grad und 110 Grad variiert.

6. Elektrische Gehrungssäge (200) nach Anspruch 1,
wobei der Tisch (16) eine hintere Erweiterung (42) aufweist, welche eine Dreh-Verbindung in einer im Wesentlichen horizontalen Ausrichtung und eine sich aufwärts erstreckende Säule (214) aufweist, zu welcher das hintere Gelenk (206) drehbar befestigt ist, wobei die Dreh-Verbindung der hinteren Erweiterung dem Sägeblatt und dem Motorzusammenbau (20) ermöglicht gekippt zu werden und schräge Schnitte zu machen.

7. Elektrische Gehrungssäge (200) nach Anspruch 2,
wobei eines oder mehrere der Zahnräder (220, 222, 224, 226, 228, 230) Zähne aufweisen, welche sich um den Umfang davon herum erstrecken.

8. Elektrische Gehrungssäge (200) nach Anspruch 2,
wobei eines oder mehrere der Zahnräder (220, 222. 224, 226, 228, 230) ein Zahnbogen ist, welcher Zähne nur an einem Abschnitt des Umfangs davon aufweist.

9. Elektrische Gehrungssäge (200) nach Anspruch 2,
wobei eines oder mehrere der ersten, zweiten, vierten und fünften Zahnräder (220; 226; 222; 230) integral mit der Struktur ausgebildet ist, zu welcher die Zahnräder nicht drehbar befestigt sind.

10. Elektrische Gehrungssäge (200) nach Anspruch 1, ferner eine erste Stoppoberfläche auf dem Drehblock (210) und eine zweiten Stoppoberfläche auf dem Sägeblatt und dem Motorzusammenbau (20) aufweisend, welche ausgebildet sind, um einander zu kontaktieren, um die abwärts Drehbewegung des Sägenblattes und des Motorzusammenbaus (20) zu begrenzen.

11. Elektrische Gehrungssäge (200) nach Anspruch 10,
wobei zumindest eine der Stoppoberflächen einstellbar ist, um die Begrenzung der Bewegung des Sägenblattes und des Motorzusammenbaus (20) zu verändern.

12. Elektrische Gehrungssäge (200), welche eine einstellbare Gehrung aufweist und fähig ist schräge Winkel zu schneiden, wie in Anspruch 1 definiert, wobei der Tisch (16) mit der Sägenbasis (12) drehbar verbunden ist, um den Gehrungswinkel des Schnittes zu verändern;
wobei der Drehblock (210) zu einer ersten Welle (232) befestigt ist, welche bezüglich der Ebene des Sägeblattes (28) transversal ausgerichtet ist, wobei das Sägenblatt und der Motorzusammenbau (20) auf der ersten Welle (232) drehbar sind, um das Sägenblatt (28) in und aus der Position zum Schneiden des Werkstückes zu bewegen;
wobei der Mechanismus (202) den Tisch (16) mit dem Drehblock (210) durch ein vorderes und hinteres Gelenk (204; 206) verbindet, wobei das vordere Gelenk (204) mit dem Drehblock (210) drehbar verbunden ist und das hintere Gelenk (206) mit dem Tisch (16) mit Wellen (208, 212, 216, 232) drehbar verbunden ist, welche parallel zueinander sind und im Wesentlichen rechtwinklig zu der Ebene des Sägenblattes(28) sind.

13. Elektrische Gehrungssäge (200) nach Anspruch 12,
wobei der Winkel zwischen dem vorderen und hinterem Gelenk (204; 206) sich ändert, wenn das Sägenblatt und der Motorzusammenbau (20) in Vorwärts- und Rückwärtsrichtung bewegt werden, wobei die Zahnradelemente (220, 222, 224, 226, 228, 230) wirken, um die Winkelausrichtung und die Höhe des Drehblocks (210) während der Bewegung im Wesentlichen konstant zu halten.

14. Elektrische Gehrungssäge (200) nach Anspruch 12,
wobei die Vielzahl von Zahnradelementen (220, 222, 224, 226, 228, 230) ein Zahnradelement (220; 222; 226; 230) aufweisen, welches an jedem Ende von jedem der vorderen und hinteren Gelenke (204; 206) angeordnet ist, und ein Zwischenzahnradelement (224; 228) aufweisen, welches die Zahnradelemente an jedem Ende miteinander verbindet.

15. Elektrische Gehrungssäge (200) nach Anspruch 14,
wobei die Zahnradelemente (220; 230), welche am nächsten zu dem Drehblock (210) und dem Tisch (16) angeordnet sind, jeweils nicht daran drehbar verbunden sind und das Zahnradelement (220; 222), welches mit einem der Zwischenzahnradelemente (224; 228) miteinander verbunden ist, nicht drehbar an dem Gelenk (204; 206) befestigt ist, welches das nicht miteinander verbindende Zwischenzahnradelement (224; 228) aufweist.

16. Elektrische Gehrungssäge (200) nach Anspruch 12,
wobei die Zahnradelemente (220, 222, 224, 226, 228, 230) zumindest einen kreisförmigen Zahnradsektor aufweisen, welcher Zähne an einem äußeren Abschnitt davon aufweist.

17. Elektrische Gehrungssäge (200) nach Anspruch 15,
wobei das Zahnradelement (226), welches mit dem Drehblock (210) verbunden ist, integral mit dem Block (210) ausgebildet ist.

18. Elektrische Gehrungssäge (200) nach Anspruch 15,
wobei das Zahnradelement (230), welches mit dem Tisch (16) verbunden ist, integral mit dem Tisch (16) ausgebildet ist.

19. Elektrische Gehrungssäge (200) nach Anspruch 15,
wobei das Zahnradelement (220; 222), welches mit einem der Gelenke (204; 206) nicht drehbar verbunden ist, integral mit dem Gelenk (204; 206) ausgebildet ist.

## Revendications

1. Scie à onglet électrique (200) comprenant :
► une base de scie (12) ayant une barrière (14) pour positionner une pièce à usiner ;
► une table (16) raccordée de manière rotative à ladite base de scie (12) ;
► un ensemble de bras à onglet (18) pour positionner de manière angulaire ladite table par rapport à ladite base de scie (12) ;
► un ensemble de moteur et de lame de scie (20) raccordé de manière opérationnelle à ladite table (16) ;
► un mécanisme de guidage linéaire (202) fixé sur ladite table (16) et étant configuré pour supporter ledit ensemble de moteur et de lame de scie (20) et permettre le mouvement dudit ensemble (20) le long d'une trajectoire linéaire prédéterminée dans une direction avant ou arrière ;
► ledit mécanisme (202) ayant un bloc de pivot (210) avec un premier axe de pivot généralement perpendiculaire au plan de ladite lame de scie (28) autour duquel ledit ensemble de moteur et de lame de scie (20) peut pivoter pour déplacer une lame de scie (28) verticalement dans et hors de la position de coupe, qui maintient ledit bloc de pivot (210) à une hauteur généralement constante pendant le mouvement dans lesdites directions avant et arrière, **caractérisée en ce que :**
► ledit mécanisme (202) a une articulation à plusieurs maillons (204, 206) interconnectant de manière pivotante ledit bloc du pivot (210) et ladite table (16) avec des axes de pivot qui sont parallèles entre eux et avec ledit premier axe de pivot ;
► ledit mécanisme (202) a un ensemble d'engrenages (220, 222, 224, 226, 228, 230) raccordé de manière opérationnelle à ladite articulation à plusieurs maillons (204, 206).

2. Scie à onglet électrique (200) selon la revendication 1, dans laquelle ladite articulation à plusieurs maillons (204 ; 206) comprend une articulation avant (204) et une articulation arrière (206) qui sont raccordées de manière pivotante l'une par rapport à l'autre autour d'un premier axe, ladite articulation avant (204) étant raccordée de manière pivotante audit bloc de pivot (210) autour d'un deuxième axe et ladite articulation arrière (206) étant raccordée de manière pivotante à ladite table (16) autour d'un troisième axe, ledit ensemble d'engrenages (220, 222, 224, 226, 228, 230) comprenant :
► un premier engrenage (220) raccordé de manière non rotative à ladite articulation arrière (206) concentrique par rapport audit premier axe ;
► un deuxième engrenage (226) raccordé de manière rotative audit bloc de pivot (210) concentrique par rapport audit deuxième axe ;
► un troisième engrenage intermédiaire rotatif (224) monté sur ladite articulation avant (204) et mettant en prise lesdits premier et deuxième engrenages (220 ; 226) ;
► un quatrième engrenage (222) raccordé de manière non rotative à ladite articulation avant (204) concentrique par rapport audit premier axe ;
► un cinquième engrenage (230) raccordé de manière non rotative à ladite table (16) concentrique par rapport audit troisième axe ;
► un sixième engrenage intermédiaire rotatif (228) monté sur ladite articulation arrière (206) et mettant en prise lesdits quatrième et cinquième engrenages (222 ; 230) ;
► lesdits engrenages étant dimensionnés pour maintenir ledit bloc de pivot (210) à une hauteur généralement constante lorsqu'il est déplacé dans lesdites directions avant et arrière.

3. Scie à onglet électrique (200) selon la revendication 2, dans laquelle la distance entre lesdits premier et deuxième axes est égale à la distance entre lesdits premier et troisième axes.

4. Scie à onglet électrique (200) selon la revendication 3, dans laquelle le diamètre dudit premier engrenage (220) représente la moitié du diamètre desdits deuxième et troisième engrenages (226 ; 224).

5. Scie à onglet électrique (200) selon la revendication 1, dans laquelle l'angle entre lesdites articulations avant et arrière (204 ; 206) varie entre approximativement 20 degrés et 110 degrés.

6. Scie à onglet électrique (200) selon la revendication 1, dans laquelle ladite table (16) comprend une extension arrière (42) qui a un raccordement pivotant généralement dans l'orientation horizontale et un montant s'étendant vers le haut (214) auquel ladite articulation arrière (206) est fixée de manière pivotante, ledit raccordement pivotant d'extension arrière permettant audit ensemble de moteur et de lame de scie (20) d'être incliné pour réaliser des coupes biseautées.

7. Scie à onglet électrique (200) selon la revendication 2, dans laquelle l'un quelconque ou plusieurs desdits engrenages (220, 222, 224, 226, 228, 230) ont des dents s'étendant autour de leur circonférence.

8. Scie à onglet électrique (200) selon la revendication 2, dans laquelle l'un quelconque ou plusieurs desdits engrenages (220, 222, 224, 226, 228, 230) sont un engrenage à secteur ayant des dents uniquement à travers une partie de sa circonférence.

9. Scie à onglet électrique (200) selon la revendication 2, dans laquelle l'un quelconque ou plusieurs desdits premier, deuxième, quatrième et cinquième engrenages (220 ; 226 ; 222 ; 230) sont formés de manière solidaire avec la structure à laquelle ledit engrenage est fixé de manière non rotative.

10. Scie à onglet électrique (200) selon la revendication 1, comprenant en outre une première surface de butée sur ledit bloc de pivot (210) et une seconde surface de butée sur ledit ensemble de moteur et de lame de scie (20) configurée pour être en contact l'une par rapport à l'autre afin de limiter le mouvement pivotant descendant dudit ensemble de moteur et de lame de scie (20).

11. Scie à onglet électrique (200) selon la revendication 10, dans laquelle au moins l'une desdites surfaces de butée est ajustable pour modifier la limite du mouvement dudit ensemble de moteur et de lame de scie (20).

12. Scie à onglet électrique (200) ayant une capacité de coupe d'angle d'onglet et de biseau ajustable selon la revendication 1, dans laquelle ladite table (16) est raccordée de manière pivotante à ladite base de scie (12) pour modifier l'angle de coupe d'onglet ;
► ledit bloc de pivot (210) est monté sur un premier arbre (232) orienté de manière transversale par rapport au plan de la lame (28), ledit ensemble de moteur et de lame de scie (20) peut tourner sur ledit premier arbre (232) pour déplacer ladite lame de scie (28) dans et hors de la position de coupe de la pièce à usiner ;
► ledit mécanisme (202) raccordant ladite table (16) avec ledit bloc de pivot (210) par une articulation avant et arrière (204 ; 206), ladite articulation avant (204) est raccordée de manière pivotante audit bloc de pivot (210) et ladite articulation arrière (206) est raccordée de manière pivotante à ladite table (16) avec des arbres (208, 212, 216, 232) qui sont parallèles entre eux et généralement perpendiculaires au plan de ladite lame (28).

13. Scie à onglet électrique (200) selon la revendication 12, dans laquelle l'angle entre lesdites articulations avant et arrière (204 ; 206) change lorsque ledit ensemble de moteur et de lame de scie (20) est déplacé dans lesdites directions avant et arrière, lesdits éléments d'engrenage (220, 222, 224, 226, 228, 230) fonctionnant pour maintenir l'orientation angulaire et la hauteur dudit bloc de pivot (210) sensiblement constantes pendant ledit mouvement.

14. Scie à onglet électrique (200) selon la revendication 12, dans laquelle ladite pluralité d'éléments d'engrenage (220, 222, 224, 226, 228, 230) comprend un élément d'engrenage (220 ; 222 ; 226 ; 230) situé à chaque extrémité de chacune desdites articulations avant et arrière (204 ; 206) et un élément d'engrenage intermédiaire (224 ; 228) interconnectant les éléments d'engrenage à chaque extrémité.

15. Scie à onglet électrique (200) selon la revendication 14, dans laquelle lesdits éléments d'engrenage (226 ; 230) qui sont positionnés le plus à proximité dudit bloc de pivot (210) et de la table (16) sont raccordés de manière non rotative respectivement à ceux-ci et l'élément d'engrenage (220 ; 222) qui s'interconnecte avec l'un desdits éléments d'engrenage intermédiaire (224 ; 228) est fixé de manière non rotative à ladite articulation (204 ; 206) ayant l'élément d'engrenage intermédiaire non interconnecté (224 ; 228).

16. Scie à onglet électrique (200) selon la revendication 12, dans laquelle lesdits éléments d'engrenage (220, 222, 224, 226, 228, 230) comprennent au moins des secteurs d'engrenage circulaires ayant des dents d'engrenage sur leur partie externe.

17. Scie à onglet électrique (200) selon la revendication 15, dans laquelle ledit élément d'engrenage (226) qui est raccordé audit bloc de pivot (210) est formé de manière solidaire avec ledit bloc (210).

18. Scie à onglet électrique (200) selon la revendication 15, dans laquelle ledit élément d'engrenage (230) qui est raccordé à ladite table (16) est formé de manière solidaire avec ladite table (16).

19. Scie à onglet électrique (200) selon la revendication 15, dans laquelle ledit élément d'engrenage (220 ; 222) qui est raccordé de manière non rotative à l'une desdites articulations (204 ; 206) est formé de manière solidaire avec ladite articulation (204 ; 206).
